# EUROPÄISCHE PATENTANMELDUNG

(11) **EP 1 862 641 A1**
(43) Veröffentlichungstag der Anmeldung: **05.12.2007**
(21) Anmeldenummer: 06011528.4
(22) Anmeldetag: 02.06.2006
(51) Int. Cl.: F01D 5/14, F04D 27/02, F04D 29/68

(54) **Ringförmiger Strömungskanal für eine in Axialrichtung von einem Hauptstrom durchströmbare Strömungsmaschine**

(71) Anmelder: SIEMENS AKTIENGESELLSCHAFT, 80333 München (DE)
(72) Erfinder: Bayere, Romain, 45138 Essen (DE); Blomeyer, Malte, 45472 Mülheim (DE); Cornelius, Christian, 45549 Sprockhövel (DE); Matthias, Torsten, 45468 Mülheim (DE); Sieber, Uwe, 45476 Mülheim (DE)

(57) **Zusammenfassung**

Die Erfindung betrifft einen Ringförmiger Strömungskanal (18) für eine Strömungsmaschine, der konzentrisch um eine in Axialrichtung verlaufende Maschinenachse (2) angeordnet und zum Führen eines Hauptstromes (26) von einer im Querschnitt kreisförmigen Begrenzungswand (22, 24) begrenzt ist, wobei die Begrenzungswand (22, 24) mehrere über deren Umfang verteilte Rückströmpassagen (46) aufweist, durch die jeweils ein dem Hauptstrom (26) an einer Entnahmeposition (50) auskoppelbarer Teilstrom (49) an einer stromauf der Entnahmeposition (50) gelegenen Einspeiseposition (52) dem Hauptstrom (26) zurückführbar ist, und mit im Strömungskanal (18) strahlenförmig angeordneten Schaufelblättern (32) eines Schaufelkranzes, deren Schaufelblattspitzen (42) jeweils unter Spaltbildung der Begrenzungswand (22, 24) gegenüberliegen, wobei die Schaufelblätter (32) in einer vorbestimmten Drehrichtung (U) entlang dem Umfang der Begrenzungswand (22 ,24) bewegbar sind.

Um eine gegen Pumpen und Strömungsabrissen unempfindlichen Verdichter anzugeben wird vorgeschlagen, dass - in Drehrichtung (U) betrachtet - die Entnahmeposition (50) jeder Rückströmpassage vor der korrespondierenden Einspeiseposition (52) liegt.

## Beschreibung

Die Erfindung betrifft einen Strömungskanal für einen Verdichter, der konzentrisch um eine in Axialrichtung verlaufende Maschinenachse angeordnet und zum axialen Führen eines Hauptstromes von einer im Querschnitt kreisförmigen Begrenzungswand begrenzt ist, wobei die Begrenzungswand mehrere über deren Umfang verteilte Rückströmpassagen aufweist, durch die jeweils ein dem Hauptstrom an einer Entnahmeposition auskoppelbarer Teilstrom an einer stromauf der Entnahmeposition gelegenen Einspeiseposition dem Hauptstrom zurückführbar ist, und mit im Strömungskanal strahlenförmig angeordneten Schaufelblättern eines Schaufelkranzes, deren Schaufelblattspitzen jeweils unter Spaltbildung der Begrenzungswand gegenüberliegen.

Gasturbinen und deren Funktionsweisen sind allgemein bekannt. Die von einem Verdichter der Gasturbine angesaugte Luft wird in diesem komprimiert und danach in einem Brenner mit Kraftstoff vermischt. Nachfolgend verbrennt das in eine Brennkammer einströmende Gemisch zu einem Heißgas, welches anschließend eine der Brennkammer nachgeschaltete Turbine durchströmt und währenddessen aufgrund seiner Entspannung den Rotor der Gasturbine in Rotation versetzt. Durch die Rotation des Rotors wird neben dem Verdichter auch ein am Rotor angekoppelter Generator angetrieben, der die bereitgestellte mechanische Energie in elektrische Energie umwandelt.

Sowohl der Verdichter als auch die Turbine setzen sich jeweils aus mehreren nacheinander geschalteten Stufen zusammen, die jeweils zwei aufeinander folgende Kränze von Schaufeln umfassen. Eine Turbinenstufe setzt sich aus einem von drehfesten Leitschaufeln gebildeten Leitschaufelkranz und einem davon stromab angeordnetem Laufschaufelkranz zusammen, wogegen eine Verdichterstufe sich aus einem Laufschaufelkranz und einem stromab davon angeordneten Leitschaufelkranz zusammensetzt; jeweils in Strömungsrichtung des durchströmenden Mediums betrachtet. Bei einer einwelligen Gasturbine sind alle Laufschaufeln am gemeinsamen Rotor fest montiert.

Die in Serien angeordneten, d.h. axial aufeinander folgenden Verdichterstufen fördern aufgrund der mit dem Rotor umlaufenden Laufschaufeln die angesaugte Luft vom Eingang des Verdichters in Richtung des Verdichterausgangs, wobei die Luft innerhalb jeder Stufe (oder Kranzes) einen inkrementalen Druckanstieg erfährt. Der gesamte Druckanstieg über dem Verdichter ist die Summe aller inkrementalen Druckanstiege über jede Stufe (oder aller Kränze).

In bekannter Weise kann es beim Betrieb der Gasturbine, insbesondere bei dem Betrieb des Verdichters der Gasturbine, vorkommen, dass bei Annäherung an die Stabilitätsgrenze sich durch Fehlanströmung und anwachsende Spaltwirbel die Rezirkulation vergrößert. Hierdurch kann innerhalb des Verdichters ein Strömungsabriss an einem oder mehreren Schaufelblättern auftreten, d.h. die Strömung der Luft in Hauptströmungsrichtung hört durch einen Teil einer Verdichterstufe auf, da die vom Rotor an die Luft übertragene Energie nicht ausreicht, diese durch die Verdichterstufe zu fördern und das erforderliche Druckverhältnis der betreffenden Verdichterstufe herzustellen. Das Druckverhältnis ist die über die betreffende Stufe des Verdichters auftretende Druckerhöhung, bezogen auf den Eingangsdruck der jeweiligen Stufe. Wird dem Strömungsabriss nicht unmittelbar entgegen gewirkt, kann sein Fortschreiten zu einer rotierenden Ablösung (rotating stall) und ggf. sogar dazu führen, dass die gesamte Luftströmung durch den Verdichter ihre Richtung umkehrt, was als Verdichter-Pumpen bekannt ist. Dieser besonders kritische Betriebszustand gefährdet die Beschaufelung und verhindert eine ausreichende Versorgung des Brennraums mit Verdichterluft, so dass ein gestörter Betrieb der Gasturbine diagnostiziert und die Maschine umgehend abgeschaltet werden muss.

Hierzu ist aus der EP 0 719 907 A1, bei der dem beschriebenen Problem entgegengewirkt werden soll, eine strukturierte Begrenzungswand bekannt, welche den Spitzen der Laufschaufeln gegenüberliegt. Diese Strukturierung des Gehäuses, das so genannte "Casing Treatment", dient zur positiven Beeinflussung der spaltnahen Strömung für die Situationen, in denen ein Strömungsabriss an einem Schaufelblatt droht. Aufgrund der Strukturierung werden dem Hauptstrom im Gebiet niedriger Strömungsgeschwindigkeiten Teilströme entnommen und stromauf der Entnahmeposition anschließend dem Hauptstrom wieder zugeführt. Die auf der Druckseite der Verdichterschaufel im Spitzenbereich entnommene Luft wird dem saugseitigen Hauptstrom der betreffenden Verdichterschaufel zur Verhinderung eines möglicherweise dort auftretenden Strömungsabrisses zugeführt. Die die Teilströme führenden Kanäle sind dementsprechend derart gegenüber der Maschinenachse- bzw. Drehachse geneigt, dass - in Drehrichtung des Rotors betrachtet - die Entnahmeposition nach der Einspeiseposition, an der der ausgekoppelte Teilstrom dem spaltnahen Hauptstrom zurückgeführt wird, liegt. Dies ist erforderlich, damit aufgrund des Staffelungswinkels die zur Drehrichtung schräg gestellten Spitzen der Schaufelblätter der Teilstrom über die Schaufelblattspitze hinweg von der Druckseite zu der Saugseite geführt werden kann. Somit ist die Längserstreckung des Rückstromkanals im Wesentlichen quer zur Geraden des schaufelspitzseitigen Staffelungswinkels, d.h. annähernd parallel zur Maschinenachse ausgerichtet.

Eine ähnliche Vorrichtung ist aus der EP 1 286 022 A1 bekannt.

Die vorgenannten Ausgestaltungen weisen den Nachteil auf, dass die Strömungsführung der Teilströme nicht optimal ist.

Aufgabe der Erfindung ist die Bereitstellung eines im Querschnitt ringförmigen Strömungskanals eines Verdichters, dessen "Casing Treatment" eine weitere Verbesserung des Betriebsbereiches des Verdichters und eine Verringerung der Neigung des Verdichters zur Strömungsablösung erzielt.

Gemäß der Erfindung wird ein gattungsgemäßer, zum Beeinflussen der spaltnahen Strömung geeigneter Strömungskanal für eine vorzugsweise axial durchströmte Strömungsmaschine bereitgestellt, wobei - in Drehrichtung der Schaufelblätter betrachtet - die Entnahmeposition jedes Rückstrombereichs vor der korrespondierenden Einspeiseposition liegt.

Mit der Erfindung wird vorgeschlagen, dass die Längserstreckung der Rückstrombereiche und der Staffelungswinkel der Spitze der Schaufelblätter gegenüber der Maschinenachse sich nicht unter einem vergleichsweise großen Winkel kreuzen und somit quer zueinander verlaufen, sondern dass die Längserstreckung der Rückströmpassagen und der Staffelungswinkel des Schaufelblattes im Spitzenbereich gegenüber der Maschinenachse nahezu identisch geneigt sind, so dass diese annähernd parallel verlaufen können. Die Erfindung geht von der Erkenntnis aus, dass die Zuströmrichtung der Teilströme im Relativsystem von Drehrichtung der Schaufelblätter nicht optimal zueinander abgestimmt ist. Man hat sich von der Vorstellung gelöst, dass der durch den Rückstrombereich zur Beeinflussung der saugseitigen Strömung eines Schaufelblattes entnommene Teilstrom nicht ihrer Druckseite entnommen und über die Spitze des betrachteten Schaufelblattes geführt werden muss. Aufgrund der - in Umfangsrichtung betrachtet - endlosen Begrenzungswand und der in einem gleichfalls endlosen Schaufelkranz angeordneten Schaufelblätter ist es möglich, den Teilstrom von einem der Schaufelblätter zu dem in Drehrichtung voreilenden Schaufelblatt zu führen. Angewandt für alle Schaufelblätter des Schaufelkranzes können somit über jeden gegenüber der Maschinenachse geeignet geneigten Rückstrombereich nach Art einer endlosen Aneinanderreihung die Druckseite und die Saugseite zweier unmittelbar benachbarter Schaufelblätter zur Beeinflussung der saugseitigen Schaufelblattströmung miteinander verbunden sein, um den gegebenenfalls drohenden Strömungsabriss an dieser Stelle wirksamer zu vermeiden.

Aufgrund der Neigung jedes Rückstrombereichs gegenüber der Maschinenachse sind die Zuströmgeschwindigkeit und Zuströmrichtung jedes in den Hauptstrom zurückgeführten Teilstroms im Bereich der jeweiligen Einspeiseposition gegenüber dem Stand der Technik entscheidend verbessert. Dies gilt insbesondere für transonisch angeströmte Schaufelblätter oder Abschnitte von Schaufelblättern, die auf einem vergleichsweise großen Radius gegenüber der Maschinenachse liegen. Auch die Kinematik des erfindungsgemäß stabilisierten Hauptstroms, insbesondere der spaltnahen Hauptströmung, kann somit wesentlich verbessert werden. Außerdem kann mit der gewählten Zuströmrichtung des Teilstroms, bezogen auf die Maschinenachse, der Drall in der Hauptströmung verstärkt werden, was sich vorteilhaft auf die lokale Anströmung und den Wirkungsgrad des Verdichters auswirkt.

Die gleichen Vorteile können bei freistehenden Leitschaufeln erzielt werden, die radial außen befestigt mit ihren freien Schaufelblattspitzen einer am Rotor angeordneten rotierenden Begrenzungswand spaltbildend gegenüberliegen. Dabei ist das erfindungsgemäße "Casing Treatment" im Rotor vorgesehen und bewegt sich gegenüber den feststehenden Leitschaufeln mit diesem mit.

Durch diese erfindungsgemäßen Maßnahmen wird der Beginn der Strömungsablösung zu geringeren Massendurchsätzen verschoben, was den Betriebsbereich eines damit ausgestatteten Verdichters erweitert. Gleichfalls tritt während des Betriebes eines solchen Verdichters seltener ein den Betrieb möglicherweise gefährdender Strömungsabriss oder "Pumpen" auf.

Vorteilhafte Ausgestaltungen sind in den Unteransprüchen beschrieben.

Gemäß einer ersten vorteilhaften Weiterbildung der Erfindung ist die Anzahl der Rückströmpassagen gleich der Anzahl oder gleich dem ganzzahligen Vielfachen der Schaufelblätter. Hierdurch kann ein besonders gleichmäßig verteiltes "Casing Treatment" entlang des Umfangs vorgegeben werden, damit an jeder Stelle des Umfangs eine gleichmäßige Beeinflussung der spaltnahen Strömung von im Betrieb vorbeieilenden Schaufelblättern erzielt werden kann.

Bevorzugtermaßen liegt die Entnahmeposition des einen Rückstrombereichs der Spitze eines der Schaufelblätter gegenüber und die zugehörige Einspeiseposition des einen Rückstrombereichs in demjenigen Bereich des Umfangs der Begrenzungswand, in welchem die Spitze des zu dem einen Schaufelblatt in Drehrichtung voreilenden Schaufelblatts liegt. Folglich ist der an einem Schaufelblatt entnommene Teilstrom zur Beeinflussung des voreilend benachbarten Schaufelblatts vorgesehen. Aufgrund dieser Maßnahme sind gegenüber der Maschinenachse vergleichsweise stark, aber auch in gleicher Richtung wie der Staffelungswinkel geneigte Rückstrombereiche vorgesehen, so dass der daraus ausströmende Teilstrom zur vorteilhaften Beeinflussung des in der Hauptströmung auftretenden Dralls beitragen kann.

Die vorgenannte Maßnahme ist besonders effizient, wenn die Entnahmeposition und die Einspeiseposition jedes Rückstrombereiches so über den Umfang verteilt sind, dass während einer Bewegung der Schaufelblätter entlang der Begrenzungswand zu einem Zeitpunkt eine Druckseitenwand des einen Schaufelblattes - in Drehrichtung gesehen - unmittelbar vor der Entnahmeposition des einen Rückstrombereiches und eine Saugseitenwand des zu dem einen Schaufelblatt voreilenden Schaufelblattes unmittelbar nach der Einspeiseposition des einen Rückstrombereiches angeordnet ist.

Üblicherweise ist die Entnahmeposition jedes Rückstrombereiches in dem Abschnitt der Begrenzungswand angeordnet, welcher stromauf den Abströmkanten der der Begrenzungswand gegenüberliegenden Schaufelblätter vorgesehen ist. Damit wird ein besonders wirksames "Casing Treatment" angegeben.

In einer weiteren Ausgestaltung der Erfindung ist die axiale Einspeiseposition jedes Rückstrombereiches in dem Abschnitt der Begrenzungswand angeordnet, welcher stromauf den Vorderkanten der der Begrenzungswand gegenüberliegenden Schaufelblätter vorgesehen ist. Dies wirkt sich besonders vorteilhaft auf den Drall aus.

Zweckmäßigerweise kann der Rückstrombereich zumindest teilweise als ein Rückstromkanal ausgebildet sein, welcher innerhalb der Begrenzungswand des Strömungskanals verläuft. Dabei können die Rückströmpassagen durch Lamellen getrennt werden und somit über den Umfang verteilte Rückstromkanäle ausbilden; sie können aber auch als in der Oberfläche der Begrenzungswand eingebrachte Nuten ausgebildet sein. Vorzugsweise können die über den Umfang verteilten Lamellen derart ausgebildet sein, dass eine optimale Zuströmung der Vorderkanten des Schaufelblatts erreicht wird. Dazu können die Lamellen entlang ihr Längserstreckung beispielsweise als profilierte Leitelemente bzw. Leitschaufeln ausgebildet sein, wodurch eine weitere verbesserte Wirkungsweise des "Casing Treatment" zu erwarten ist. Insbesondere können so ggf. höhere Austritts- bzw. Zuströmgeschwindigkeiten der Teilströme erreicht werden, sogar unabhängig davon, ob das "Casing Treatment" erfindungsgemäß ausgebildet ist oder nicht.

Aus Festigkeitsgründen und Montagegründen tragen die Lamellen einen axialen Abschnitt der Begrenzungswand, welcher zwischen der Entnahmeposition und der Einspeiseposition liegt.

Als besonders vorteilhaft hat sich die Ausgestaltung der Erfindung gezeigt, bei der die über den Umfang verteilten Rückstrombereiche entnahmeseitig und/oder einspeiseseitig jeweils in einem entlang des Umfangs endlos umlaufenden Ringspalt beginnen bzw. enden. Sollten über den Umfang verteilt unregelmäßige Einströmungen in den Rückstrombereich bzw. Ausströmungen aus dem Rückstrombereich auftreten, so kann hierdurch eine Vergleichmäßigung von beispielsweise lokalen Drücken und Strömungsbedingungen erreicht werden. In diesem Fall sind die zur Bestimmung der Neigung der Rückströmpassagen herauszuziehenden Positionen jeweils dann in dem Abschnitt des Umfangs zu sehen, in welchem die gegenüber der Maschinenachse geneigten Lamellen beginnen bzw. enden.

Die vorangegangenen und andere Merkmale sowie Vorteile der vorliegenden Erfindung werden aus der folgenden Beschreibung einer Ausführungsform deutlicher. Es zeigt:
- FIG 1: eine Gasturbine in einem Längsteilschnitt,
- FIG 2: eine schematische Darstellung durch den eintrittsseitigen Querschnitt des Verdichters mit einem in der äußeren Gehäusewand angeordneten "Casing Treatment",
- FIG 3: die Draufsicht auf das "Casing Treatment" gemäß FIG 2 von radial außen in Richtung zur Maschinenachse und
- FIG 4: das Geschwindigkeitsdreieck für die in FIG 3 gezeigte Anordnung.

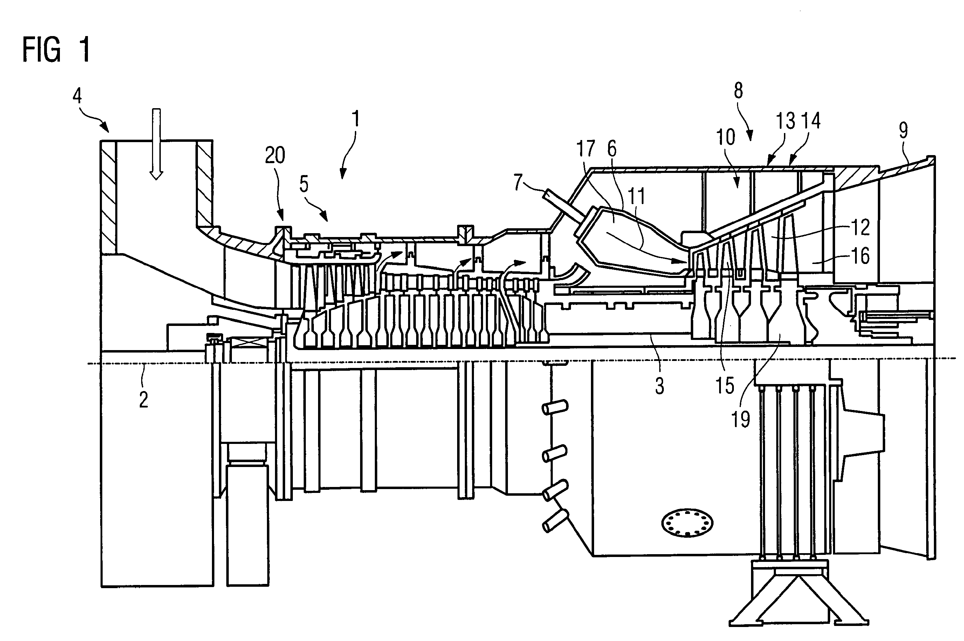

FIG 1 zeigt eine Gasturbine 1 in einem Längsteilschnitt. Sie weist im Inneren einen um eine Maschinenachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgaskanal 16 verbunden ist. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 16 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Scheibe 19 am Rotor 3 angebracht sind. An dem Rotor 3 ist ein Generator oder eine Arbeitsmaschine (nicht dargestellt) angekoppelt.

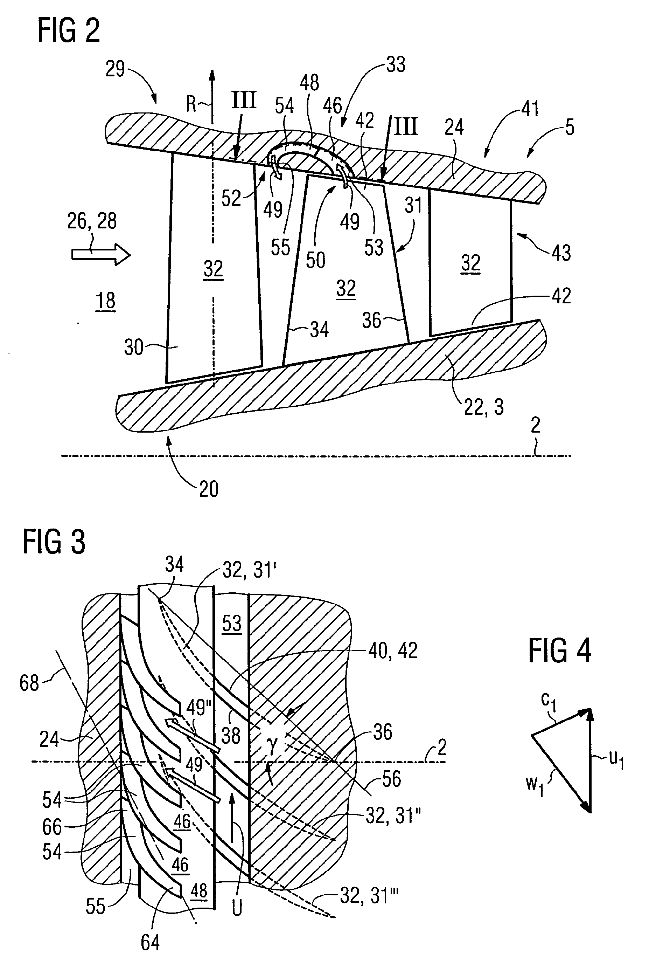

FIG 2 zeigt schematisch einen Querschnitt durch das eintrittsseitige Ende 20 des Verdichters 5, in welchem ein sich konisch verjüngender Strömungskanal 18 vorgesehen ist. Der Strömungskanal 18 wird radial innen von einer rotorseitigen Begrenzungswand 22 und radial außen von einer gehäuseseitigen Begrenzungswand 24 umgeben, welche jeweils konzentrisch zur Maschinenachse 2 angeordnet sind. In Hauptströmungsrichtung 28 der Hauptströmung 26 betrachtet ist zuerst ein Kranz 29 von um die Radialrichtung R verdrehbaren Vorleitschaufeln 30 vorgesehen, mittels denen der Massenstrom des Hauptstroms 26 bedarfsgerecht eingestellt werden kann. Stromab der Vorleitschaufeln 30 ist ein am Rotor 3 befestigtes Schaufelblatt 32 einer Laufschaufel 31 des Laufschaufelkranzes 33 einer ersten Verdichterstufe gezeigt. Jedes Schaufelblatt 32 umfasst eine von der Hauptströmung 26 zuerst angeströmte Vorderkante 34 und eine Hinterkante 36, an der die Hauptströmung 26 das Schaufelblatt 32 verlässt. Die Schaufelblätter 32 sind jeweils von einer im Wesentlichen konvex gewölbten saugseitigen Schaufelwand 38 und von einer im Wesentlichen konkav gewölbten druckseitigen Schaufelwand 40 gebildet (FIG 3). Das Schaufelblatt 32 der Laufschaufel 31 ist einseitig am Rotor 3 eingespannt, so dass dessen Schaufelblattspitze 42 der äußeren Begrenzungswand 24 unter Spaltbildung gegenüberliegt.

Stromab der Laufschaufel 31 ist der zur ersten Verdichterstufe zugehörige Kranz 41 von Leitschaufeln 43 an der äußeren Begrenzungswand 24 befestigt. Jede Leitschaufel 43 ist freistehend, d.h. die der inneren Begrenzungswand 22 gegenüberliegende Spitze 42 des Schaufelblattes 32 ist nicht in einem den Rotor 3 umgreifenden Befestigungsring festgelegt, sondern liegt auch unter Spaltbildung der am Rotor 3 angeordneten Begrenzungswand 22 gegenüber. Das Schaufelblatt 32 der Leitschaufel 43 ist demnach lediglich radial außen am Gehäuse einseitig eingespannt.

In einem axialen Abschnitt der äußeren Begrenzungswand 24, welcher teilweise der Schaufelblattspitze 42 der Laufschaufel 31 gegenüberliegt, ist ein "Casing-Treatment" vorgesehen, welches mehrere, über den Umfang der äußeren Begrenzungswand 24 gleichmäßig verteilte Rückströmpassagen 46 in Form von innerhalb der äußeren Begrenzungswand 24 angeordneten Rückströmkanälen 48 umfasst. Die Rückströmpassagen 46 könnten alternativ auch als in der äußeren Begrenzungswand 24 eingefräste Nuten ausgebildet sein.

Die über den Umfang verteilten Rückstromkanäle 48 sind durch Lamellen 54 voneinander getrennt. Die Lamellen 54 erstrecken sich lediglich teilweise über die gesamte Länge der Rückströmpassagen 46. Dadurch wird erreicht, dass sowohl einströmseitig als auch entnahmeseitig jeweils ein in der Begrenzungswand 24 endlos umlaufender Ringspalt 53, 55 zur Entnahme des Teilstroms 69 und zur dessen Rückführung in den Hauptstrom 26 bereitgestellt wird.

Durch die Rückströmpassagen 46 kann ein Teilstrom 49 dem Hauptstrom 26 an einer Entnahmeposition 50 ausgekoppelt werden, und stromauf - bezogen auf die Entnahmeposition 50 und die Hauptströmungsrichtung 28 - in einer Einspeiseposition 52 dem Hauptstrom 26 wieder zugeführt werden.

FIG 3 zeigt hierzu die Draufsicht gemäß Schnittlinie III-III. Die gleichen Elemente der Figur 2 sind mit identischen Bezugszeichen beschriftet. Die Draufsicht zeigt drei schematisch dargestellte Laufschaufeln 31', 31", 31''' mit deren zugehörigen Schaufelblättern 32. Die Schaufelblätter 32 weisen jeweils die saugseitige Schaufelwand 38 und die druckseitige Schaufelwand 40 auf, welche sich jeweils von der anströmseitigen Vorderkante 34 zur abströmseitigen Hinterkante 36 erstrecken. Eine die Vorderkante 34 mit der Hinterkante 36 verbindende Gerade 56 schneidet die Maschinenachse 2 in einem Staffelungswinkel γ.

Durch den ersten Ringspalt 53 können die Teilströme 49 in den Rückstrombereich 46 - d.h. aus der Blattebene heraus - einströmen. Die dann durch die Begrenzungswand 24 entgegen der Hauptströmungsrichtung 28 strömenden Teilströme 49 werden anschließend nach Durchströmen der Rückströmkanäle 48 durch den stromauf der Vorderkante 34 angeordneten zweiten Ringspalt 55 dem Hauptstrom 26 zurückgeführt.

Die Lamellen 54 können in Form von aerodynamisch optimierten Profilen gebildet werden, wodurch eine besonders effiziente Wirkungsweise des "Casing Treatments" zu erwarten ist. Die Lamellen 54 weisen jeweils zwei einander gegenüberliegende Enden 64, 66 auf. Eine die Enden 64, 66 einer der Lamellen 54 verbindende Gerade 68 ist gegenüber der Maschinenachse 2 in ähnlicher Art und Weise geneigt wie die Gerade 56, welche den Staffelungswinkel γ beschreibt. Beide Geraden 56, 68 schließen einen minimalen Winkel ein, der kleiner als 30° ist.

Da die gezeigte Ausführungsform entnahmeseitige und einspeiseseitige Ringspalte 53, 55 vorsieht, sind die zur Bestimmung der Neigung der Rückströmkanäle 48 herauszuziehenden Positionen jeweils dann in dem Anschnitt des Umfangs zu sehen, in welchem die gegenüber der Maschinenachse 2 geneigten Lamellen 54 beginnen bzw. enden.

Aufgrund der vergleichsweise großen Neigung der Lamellen 54 gegenüber der Maschinenachse 2 - gekennzeichnet durch die Gerade 68 -, welche in ähnlicher Weise wie der Staffelungswinkel γ verläuft, wird jeder durch die Rückstromkanäle 48 strömende Teilstrom 49 derart umgelenkt, dass diesen eine Strömungskomponente aufgeprägt wird, welche mit der Drehrichtung U der Laufschaufeln 31 gleichgerichtet ist. Somit wird jeder der Hauptströmung 26 entnommene Teilstrom 49 - in Drehrichtung U der Laufschaufeln 31 betrachtet - an einer Position dem Hauptstrom 26 zurückgeführt, die bezogen auf die Entnahmeposition 50 voreilend ist.

Beispielsweise wird der mit dem Bezugszeichen 49" versehende Teilstrom von der druckseitigen Schaufelwand 40 der Laufschaufel 31" entnommen und im Bereich vor der Vorderkante 34 der Laufschaufel 31', welche bezogen auf die Laufschaufel 31" voreilend angeordnet ist, eingespeist.

FIG 4 zeigt das zur FIG 3 zugehörige Geschwindigkeitsdreieck, bei dem mit u₁ der Geschwindigkeitsvektor der Schaufelblätter 32 im Spitzenbereich bezeichnet ist, mit c₁ der Geschwindigkeitsvektor der Teilströmung 49, welche durch einen Rückströmkanal 48 dem Hauptstrom 26 zugeführt wird und mit w₁ der Geschwindigkeitsvektor, der das Schaufelblatt 32 im Bereich der Schaufelblattspitze 42 anströmenden Hauptströmung 26. Aus dem Geschwindigkeitsdreieck geht hervor, dass jeder Teilstrom 49 eine mit der Drehrichtung U gleich gerichtete Strömungskomponente aufweist und nicht, wie beim nächstliegenden Stand der Technik, eine entgegengesetzt gerichtete Strömungskomponente. Hierdurch kann der Drall der Hauptströmung 26 positiv verstärkt werden, wodurch sich beim nahe der Pumpgrenze ablaufenden Betrieb des Verdichters 5 ein Ablösen der sauseitigen Strömung im Vergleich zum nächstliegenden Stand der Technik weiter verzögert auftritt. Dies wird erreicht, indem aus dem Gebiet niedriger Strömungsgeschwindigkeiten oberhalb der Schaufelblattspitze 42 Teile der Hauptströmung 26 zurück zur Vorderkante 34 der Laufschaufel 31 transportiert und dort vorzugsweise mit größtmöglicher Geschwindigkeit eingeblasen werden, was die für das Pumpen verantwortliche Blockade verringert. Mit der vorgeschlagenen Lösung kann die Strömungsführung von Teilströmung 49 und Hauptströmung 26, insbesondere während des Teillast-Betriebes, weiter verbessert werden, da erstmalig die Zuströmrichtung der Teilströmung 49 im Relativsystem der Laufschaufel 31, wie in FIG 4 dargestellt, berücksichtigt und verbessert wird.

Außerdem kann durch profilierte Lamellen 54, die entlang ihrer Längserstreckung ähnlich aerodynamisch gewölbt sind wie die Schaufelblätter 32 von Verdichterlauf- bzw. -leitschaufeln 31, 43, eine besonders verlustarme Führung der Teilströme 49 durch die bzw. entlang der äußeren Begrenzungswand 24 erreicht werden, unabhängig von der Erfindung.

Ingesamt wird mit der Erfindung ein axial durchströmter Verdichter 5 mit einem "Casing Treatment" bereitgestellt, der unempfindlicher gegen Strömungsablösung und "Pumpen" ist, da der Zuströmwinkel der durch die Begrenzungswand 22, 24 zurückgeführte Teilströme 49 im Relativsystem der Laufschaufel 31 berücksichtigt und verbessert ist. Hierzu sind die den Teilstrom 49 führende Kanäle 48 gegenüber der Drehrichtung U derart geneigt, dass jede rotierende Laufschaufel 31 zuerst an den Entnahmeöffnungen 50 und danach an den Einspeiseöffnungen 52 vorbeiläuft.

## Patentansprüche

1. Ringförmiger Strömungskanal (18) für eine Strömungsmaschine,
der konzentrisch um eine in Axialrichtung verlaufende Maschinenachse (2) angeordnet und von einer im Querschnitt kreisförmigen Begrenzungswand (22, 24) zum Führen eines Hauptstromes (26) begrenzt ist,
wobei die Begrenzungswand (22, 24) mehrere über deren Umfang verteilte Rückströmpassagen (46) aufweist, durch die jeweils ein dem Hauptstrom (26) an einer Entnahmeposition (50) auskoppelbarer Teilstrom (49) an einer stromauf der Entnahmeposition (50) gelegenen Einspeiseposition (52) in den Hauptstrom (26) zurückführbar ist, und
mit im Strömungskanal (18) strahlenförmig angeordneten Schaufelblättern (32) eines Schaufelkranzes, deren Schaufelblattspitzen (42) jeweils unter Spaltbildung der Begrenzungswand (22, 24) gegenüberliegen,
wobei die Schaufelblätter (32) in einer vorbestimmten Drehrichtung (U) entlang dem Umfang der Begrenzungswand (22, 24) oder
die Begrenzungswand (22, 24) in einer vorbestimmten Drehrichtung (U) gegenüber den Schaufelblättern (32) des Schaufelkranzes (41) bewegbar sind,
**dadurch gekennzeichnet, dass**
- in Drehrichtung (U) betrachtet - die Entnahmeposition (50) jeder Rückströmpassage (46) vor der korrespondierenden Einspeiseposition (52) liegt.

2. Strömungskanal (18) nach Anspruch 1,
bei dem die Anzahl der Rückströmpassagen (46) gleich der Anzahl oder gleich dem ganzzahligen Vielfachen der Schaufelblätter (32) ist.

3. Strömungskanal (18) nach Anspruch 1 oder 2,
bei dem die Entnahmeposition (50) der einen Rückströmpassage (46) der Spitze (42) eines der Schaufelblätter (32) gegenüberliegt und die zugehörige Einspeiseposition (52) der einen Rückströmpassage (46) in demjenigen Bereich des Umfangs der Begrenzungswand (22, 24) angeordnet ist, in welchem die Spitze (42) des zu dem einen Schaufelblatt (32) in Drehrichtung (U) voreilenden Schaufelblatts (32) liegt.

4. Strömungskanal (18) nach Anspruch 3,
bei dem die Entnahmeposition (50) und die Einspeiseposition (52) der Rückströmpassagen (46) so über den Umfang verteilt sind, dass während einer Bewegung der Schaufelblätter (32) entlang der Begrenzungswand (22, 24) zu einem Zeitpunkt eine Druckseitenwand (40) des einen Schaufelblattes (32) - in Drehrichtung (U) betrachtet - unmittelbar vor der Entnahmeposition (50) der einen Rückströmpassage (46) und eine Saugseitenwand (38) des zu dem einen Schaufelblatt (32) in Drehrichtung (U) voreilenden Schaufelblattes (32) unmittelbar nach der Einspeiseposition (52) der korrespondierenden Rückströmpassage (46) angeordnet ist.

5. Strömungskanal (18) nach einem der Ansprüche 1 bis 4, bei dem axial gesehen die Entnahmeposition (50) jeder Rückströmpassage (46) in dem Abschnitt der Begrenzungswand (22, 24) angeordnet ist, welcher stromauf den Hinterkanten (36) der der Begrenzungswand (22, 24) gegenüberliegenden Schaufelblätter (32) vorgesehen ist.

6. Strömungskanal (18) nach einem der Ansprüche 1 bis 5, bei dem axial gesehen die Einspeiseposition (52) jeder Rückströmpassage (46) in dem Abschnitt der Begrenzungswand (22, 24) angeordnet ist, welcher stromauf den Vorderkanten (34) der dem Begrenzungswand (22, 24) gegenüberliegenden Schaufelblätter (32) vorgesehen ist.

7. Strömungskanal (18) nach einem der Ansprüche 1 bis 6, bei dem die Rückströmpassage (46) zumindest teilweise als ein Rückströmkanal (48) ausgebildet ist.

8. Strömungskanal (18) nach Anspruch 7,
bei dem die Rückströmpassagen (46) durch Lamellen (54) getrennt sind.

9. Strömungskanal (18) nach Anspruch 8,
bei dem die Lamellen (54) entlang ihrer Längserstreckung aerodynamisch profiliert sind.

10. Strömungskanal (18) nach Anspruch 8 oder 9,
bei dem die Entnahme der Rückströme (49) und/oder Einspeisung der Rückströme (49) in den Hauptstrom (26) jeweils in einem Ringspalt (53, 55) erfolgt.

11. Verdichter (5) mit einem Strömungskanal (18) nach einem der Ansprüche 1 bis 10.
